# FASCICULE DE BREVET EUROPEEN

(11) **EP 3 555 202 B1**
(45) Date de publication et mention de la délivrance du brevet: **18.11.2020**
(21) Numéro de dépôt: 17822417.6
(22) Date de dépôt: 14.12.2017
(51) Int. Cl.: C08L 21/00, B60C 1/00, C08K 3/04, C08L 23/22

(54) **COMPOSITION DE CAOUTCHOUC COMPRENANT UNE FAIBLE TENEUR EN NOIR DE CARBONE ET UNE FORTE TENEUR EN UNE AUTRE CHARGE**
KAUTSCHUKZUSAMMENSETZUNG MIT EINEM NIEDRIGEN RUSSGEHALT UND EINEM HOHEN GEHALT AN EINEM ANDEREN FÜLLSTOFF
RUBBER COMPOSITION HAVING A LOW CARBON BLACK CONTENT AND A HIGH CONTENT OF ANOTHER FILLER

(30) Priorité: 16.12.2016 FR 1662658
(43) Date de publication de la demande: 23.10.2019
(73) Titulaire: Compagnie Générale des Etablissements Michelin, 63000 Clermont-Ferrand (FR)
(72) Inventeur: BIZET, Séverine, 63040 Clermont-Ferrand Cedex 9 (FR); RIOU, Aline, 63040 Clermont-Ferrand Cedex 9 (FR); LOPEZ, Béatrice, 63040 Clermont-Ferrand Cedex 9 (FR)
(74) Mandataire: Bocchi, Brigitte
(86) Numéro de dépôt international: PCT/FR2017/053559
(87) Numéro de publication internationale: WO 2018/109391

(56) Documents cités:
- WO-A1-2009/077541
- WO-A1-2010/016976
- WO-A1-2010/112515
- WO-A1-2013/060858
- WO-A1-2014/060287
- WO-A1-2016/001226

## Description

Le domaine de la présente invention est celui des compositions de caoutchouc pour pneumatiques, notamment celui des compositions destinées à être utilisées comme gomme intérieure pour pneumatiques.

Les pneumatiques sans chambre à air présentent une surface intérieure de faible perméabilité à l'air afin d'éviter un dégonflage du pneumatique et de protéger les zones internes sensibles du pneumatique, telles que les nappes contenant des câbles métalliques sensibles à l'oxydation, contre les arrivées d'oxygène et d'eau. Cette protection permet d'améliorer l'endurance du pneumatique. Une telle protection de la surface intérieure des pneumatiques est généralement réalisée par des gommes intérieures constituées par des compositions élastomériques à base de caoutchouc butyle et noir de carbone.

Mais, depuis que les économies de carburant et la nécessité de protéger l'environnement sont devenues une priorité, il est souhaitable de produire des gommes intérieures présentant un poids et une hystérèse aussi faibles que possible afin d'obtenir une résistance au roulement du pneumatique améliorée. Or, les performances en termes d'imperméabilité à l'air des caoutchoucs butyles sont liées à une épaisseur minimum non négligeable (de l'ordre du millimètre) et donc à un certain poids, ce qui ne permet pas de répondre efficacement à ces nouvelles exigences.

Ainsi il est nécessaire d'ajouter des charges lamellaires, qui peuvent être des charges semi-renforçantes, à la composition de caoutchouc de gomme intérieure pour améliorer son imperméabilité.

Cependant en quantité importante, ces charges semi-renforçantes nuisent à certaines propriétés de la composition à cuit : on observe par exemple une dégradation des propriétés mécaniques, notamment de la résistance à la flexion et propriétés de rigidité à froid.

Il existe donc un besoin constant de diminuer le poids des gommes intérieures sans affecter les autres propriétés indispensables à ces gommes intérieures.

Différentes solutions ont été envisagées pour remédier à ces inconvénients.

Une solution a consisté à introduire des plastifiants de type huile pour pallier les problèmes de propriétés mécaniques exposés précédemment. Toutefois, l'ajout d'huiles plastifiantes dans des compositions de caoutchouc pour gomme intérieure pénalise très fortement leur imperméabilité.

D'autres solutions consistent à utiliser des charges lamellaires telles que du graphite afin d'améliorer l'imperméabilité de la composition, en combinaison avec un faible taux de noir de carbone. Ainsi, la demande WO2016/001226 des demanderesses décrit une composition de caoutchouc pour gomme intérieure de pneumatique à base d'au moins un caoutchouc butyle, un faible taux de noir de carbone, du graphite et une huile plastifiante hydrocarbonée, qui présente un bon compromis de propriétés.

Il est connu également du document EP2671917A1 des compositions de caoutchouc pour gomme intérieure de pneumatique à base d'au moins un caoutchouc butyle, d'une huile plastifiante, du noir de carbone à un faible taux, et un fort taux d'argile lamellaire. Toutefois, ces compositions ne présentent pas un bon compromis de propriétés (rigidité à froid, résistance à la flexion et imperméabilité).

Les demanderesses ont poursuivi leurs recherches et ont découvert, de manière surprenante, que l'utilisation combinée, dans une composition pour gomme intérieure de pneumatique, de noir de carbone et de graphite à des taux respectifs très spécifiques et d'huile plastifiante, permet à cette composition de présenter des propriétés mécaniques améliorées sans une diminution de ses propriétés d'imperméabilité et de rigidité à froid.

L'invention a donc pour objet une composition de caoutchouc à base d'au moins:
- un élastomère,
- du noir de carbone avec un taux allant de 2 à 15 pce,
- du graphite avec un taux supérieur ou égal à 60 pce, et
- une huile plastifiante dont le taux est inférieur ou égal à 30 pce.

Une telle composition selon l'invention présente des propriétés mécaniques, notamment de contrainte à la rupture et d'énergie rupture, améliorées par rapport à l'art antérieur, tout en conservant de bonnes propriétés d'imperméabilité.

Préférentiellement, l'invention concerne une composition telle que définie ci-dessus, dans laquelle le taux de graphite est inférieur ou égal à 100 pce.

Préférentiellement, l'invention concerne une composition telle que définie ci-dessus, dans laquelle le taux de graphite est supérieur ou égal à 65 pce, de préférence supérieur ou égal à 70 pce, plus préférentiellement supérieur ou égal à 75 pce.

Préférentiellement, l'invention concerne une composition telle que définie ci-dessus, dans laquelle le taux de noir de carbone est inférieur ou égal à 9 pce.

Préférentiellement, l'invention concerne une composition telle que définie ci-dessus, dans laquelle le taux de noir de carbone va de 2 à 9 pce.

Préférentiellement, l'invention concerne une composition telle que définie ci-dessus, dans laquelle l'élastomère est un élastomère butyle ou un mélange d'élastomères butyles.

Préférentiellement, l'invention concerne une composition telle que définie ci-dessus, dans laquelle le ou les élastomères butyles sont choisis parmi les polymères isobutylène, les copolymères d'isobutylène et d'isoprène, les polymères isobutylène halogénés et les copolymères d'isobutylène et d'isoprène halogénés.

Préférentiellement, l'invention concerne une composition telle que définie ci-dessus, comprenant en outre au moins un deuxième élastomère différent d'un élastomère butyle ou d'un mélange d'élastomères butyles.

Préférentiellement, l'invention concerne une composition telle que définie ci-dessus, dans laquelle le deuxième élastomère est un élastomère diénique choisi parmi les polybutadiènes, les polyisoprènes de synthèse, le caoutchouc naturel, les copolymères de butadiènes, les copolymères d'isoprènes et les mélanges de ces élastomères.

Préférentiellement, l'invention concerne une composition telle que définie ci-dessus, dans laquelle le second élastomère est un élastomère diénique choisi parmi les copolymères de butadiène-styrène, les copolymères d'isoprène-butadiène, les copolymères d'isoprènes-styrène et les copolymères d'isoprène-butadiène-styrène et les mélanges de ces polymères.

Préférentiellement, l'invention concerne une composition telle que définie ci-dessus, dans laquelle le ou les élastomères butyles sont présents à un taux supérieur ou égal à 50 pce.

Préférentiellement, l'invention concerne une composition telle que définie ci-dessus, dans laquelle le ou les élastomères butyles sont les seuls élastomères de la composition.

Préférentiellement, l'invention concerne une composition telle que définie ci-dessus qui comprend en outre une résine plastifiante dont le taux est inférieur ou égal à 5 pce.

Préférentiellement, l'invention concerne une composition telle que définie ci-dessus, dans laquelle l'huile plastifiante est choisie parmi les polymères diéniques liquides, les huiles naphténiques, les huiles paraffiniques, les huiles MES, les huiles TDAE, les huiles minérales, les huiles végétales, les plastifiants éthers, les plastifiants esters, les plastifiants phosphates, les plastifiants sulfonates et les mélanges de ces composés.

Préférentiellement, l'invention concerne une composition telle que définie ci-dessus dans laquelle le taux d'huile plastifiante est supérieur ou égal à 5 pce.

Préférentiellement, l'invention concerne une composition telle que définie ci-dessus, dans laquelle le taux d'huile plastifiante va de 5 à 30 pce, de préférence va de 10 à 20 pce.

L'invention a également pour objet une gomme intérieure comprenant au moins une composition de l'invention telle que définie ci-dessus.

L'invention a également pour objet un pneumatique comprenant au moins une composition de l'invention telle que définie ci-dessus ou comprenant une gomme intérieure telle que définie ci-dessus.

L'invention ainsi que ses avantages seront aisément compris à la lumière de la description et des exemples de réalisations qui suivent.

### MESURES ET TEST UTILISES

### 1) Propriétés après cuisson : cassage

Les mesures de cassage sont effectuées à 100°C et conformément à la norme française NF T 46-002 de septembre 1988. Les éprouvettes de cassage sont de type H2 telles que décrites dans la norme NF ISO 37 du 1^{ier} mars 2012 à l'exception de l'épaisseur qui est de 2,5 cm. On détermine la force à exercer pour obtenir la rupture (contrainte à la rupture, en MPa (en N/mm)) et on mesure l'allongement à rupture (en %).

Ainsi, on peut déterminer l'énergie pour provoquer la rupture (Energie Rupture) de l'éprouvette qui est le produit de la contrainte à la rupture et de l'allongement à la rupture (Energie Rupture = contrainte à la rupture * allongement à la rupture).

Les résultats sont indiqués en base 100 ; la valeur arbitraire 100 étant attribuée au témoin respectivement pour la contrainte à la rupture et pour l'Energie Rupture. Un résultat inférieur à 100 pour la contrainte à la rupture ou pour l'Energie Rupture indique une diminution de la valeur concernée, qui correspond à une baisse de la performance de résistance à la rupture et inversement, un résultat supérieur à 100, indique une augmentation de cette valeur, ce qui correspond à une amélioration de cette performance.

### 2) Propriétés après cuisson : propriétés dynamiques

La température de transition vitreuse dynamique est mesurée sur un viscoanalyseur (Metravib VA4000) et conformément à la norme ASTM D 5992-96 (2011).

On enregistre la réponse d'une éprouvette constituée de deux pastilles cylindriques de 2 mm d'épaisseur chacune et de 400 mm² de section et d'un centimètre de diamètre. L'éprouvette est soumise à une sollicitation sinusoïdale en cisaillement simple alterné, à la fréquence de 10Hz, sous une contrainte de 0,1 MPa, pendant un balayage en température entre -60°C à +60°C.

Le positionnement de la température de transition vitreuse dynamique (Tg) est défini par le positionnement du maximum de tan δ (ratio des modules visqueux et élastiques = G"/G').

### 3) Propriétés après cuisson : la perméabilité

Les valeurs de perméabilité sont mesurées en utilisant un « testeur » de perméabilité MOCON OXTRAN 2/60 à 40°C. Des échantillons cuits sous forme de disques d'une épaisseur déterminée (approximativement 0,8 à 1 mm) sont montés sur l'appareil et rendus étanches avec de la graisse à vide. L'une des faces du disque est maintenue sous 10 psi d'azote alors que l'autre face est maintenue sous 10 psi d'oxygène (1 psi = 6894,76 Pa). On contrôle l'augmentation de la concentration en oxygène en utilisant un détecteur à oxygène « Coulox » sur la face maintenue sous azote. On note la concentration en oxygène sur la face maintenue sous azote permettant d'atteindre une valeur constante, utilisée pour déterminer la perméabilité à l'oxygène.

Une valeur arbitraire de 100 est donnée pour la perméabilité à l'oxygène du témoin, un résultat inférieur à 100 indiquant une diminution de la perméabilité à l'oxygène donc une meilleure imperméabilité.

### DESCRIPTION DETAILLEE

L'invention a donc pour objet une composition de caoutchouc à base d'au moins :
- un élastomère,
- du noir de carbone avec un taux allant de 2 à 15 pce,
- du graphite avec un taux supérieur ou égal à 60 pce, et
- une huile plastifiante dont le taux est inférieure ou égal à 30 pce.

Par expression « composition à base de », on entend une composition comportant ou comprenant le mélange et/ou le produit de réaction in situ des différents constituants utilisés, certains de ces constituants étant susceptibles de, ou destinés à réagir entre eux, aux moins en partie, lors des différentes phases de fabrication de la composition, ou lors de la cuisson ultérieure, modifiant la composition telle qu'elle est préparée au départ. Ainsi, les compositions telles que mises en œuvre pour l'invention peuvent être différentes à l'état non réticulé et à l'état réticulé.

Dans la présente description, sauf indication expresse différente, tous les pourcentages (%) indiqués sont des % en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b). Dans la présente, lorsqu'on désigne un intervalle de valeurs par l'expression « de a à b », on désigne également et préférentiellement l'intervalle représenté par l'expression « entre a et b ».

Dans la présente demande, on entend par « partie pour cent d'élastomère » ou «pce», la partie en poids d'un constituant pour 100 parties en poids du ou des élastomères c'est-à-dire du poids total du ou des élastomères. Ainsi, un constituant à 60 pce signifiera par exemple 60 g de ce constituant pour 100 g d'élastomère.

Par « majoritairement », « à titre majoritaire » ou « majoritaire », on entend au sens de la présente invention, un composé qui représente la plus grande quantité en masse ou en poids parmi les composés du même type. En d'autres termes, la masse de ce composé représente plus de 50 % de la masse totale des composés du même type dans la composition. A titre d'exemple, une charge renforçante dite majoritaire est la charge renforçante représentant la plus grande masse par rapport à la masse totale des charges renforçantes de la composition. En d'autres termes, la masse de cette charge renforçante représente plus de 50 % de la masse totale des charges renforçantes dans la composition.

Dans le cadre de l'invention, les composés, les réactifs et autres composants mentionnés dans la description, peuvent être d'origine fossile ou biosourcée. Dans ce dernier cas, ils peuvent être, partiellement ou totalement, issus de la biomasse ou obtenus à partir de matières premières renouvelables issues de la biomasse. Sont concernés notamment les monomères, les polymères, les plastifiants, les charges, etc.

### ∘ Elastomère

De façon usuelle dans la présente demande, on utilise indifféremment dans le texte les termes « élastomère » et « caoutchouc » qui sont interchangeables.

La composition conforme à l'invention peut comprendre un ou plusieurs élastomères, c'est-à-dire un mélange ou un coupage de deux ou plusieurs élastomères. On parle aussi de matrice élastomérique, c'est-à-dire l'ensemble des élastomères (ou caoutchoucs) de la composition de l'invention. Ainsi, la matrice élastomérique peut notamment être constituée d'un seul élastomère mais aussi d'un mélange ou coupage de deux élastomères ou de plusieurs élastomères.

Préférentiellement, l'élastomère dans la composition de l'invention est un élastomère butyle ou un mélange d'élastomères butyles.

Par « caoutchouc butyle » ou «élastomère butyle » au sens de la présente invention, on entend un homopolymère d'isobutylène (polymère isobutylène) ou un copolymère d'isobutylène et d'isoprène, ainsi que les dérivés halogénés, en particulier généralement bromés ou chlorés, de ces homopolymères d'isobutylène et de ces copolymères d'isobutylène et d'isoprène.

De manière particulièrement préférée, le ou les caoutchoucs butyles utilisables dans la composition selon l'invention sont choisis parmi les caoutchoucs isobutylène, les copolymères d'isobutylène et d'isoprène (IIR), les caoutchoucs bromobutyles tels que le copolymère bromoisobutylène-isoprène (BIIR) et les caoutchoucs chlorobutyles tels que le copolymère chloroisobutylène-isoprène (CIIR) et les mélanges de ces caoutchoucs.

Par extension de la définition précédente, on inclura également sous l'appellation « caoutchouc butyle » des copolymères d'isobutylène et de dérivés de styrène tels que les copolymères d'isobutylène et méthylstyrène bromé (BIMS) dont fait notamment partie l'élastomère nommé EXXPRO commercialisé par la société Exxon.

Par élastomère ou caoutchouc « diénique », doit être compris, de manière connue, un ou plusieurs élastomères issus au moins en partie (i.e ; un homopolymère ou un copolymère) de monomères diènes (monomères porteurs de deux doubles liaisons carbone-carbone, conjuguées ou non).

Ces élastomères diéniques peuvent être classés dans deux catégories : « essentiellement insaturés » ou « essentiellement saturés ».

On entend en général par « essentiellement insaturé », un élastomère diénique issu au moins en partie de monomères diènes conjugués, ayant un taux de motifs ou unités d'origine diénique (diènes conjugués) qui est supérieur à 15 % (% en mole). Dans la catégorie des élastomères diéniques « essentiellement insaturés », on entend en particulier par élastomère diénique « fortement insaturé » un élastomère diénique ayant un taux de motifs d'origine diénique (diènes conjugués) qui est supérieur à 50 % (% en mole).

C'est ainsi que des élastomères diéniques tels que certains caoutchoucs butyles ou copolymères de diènes et d'alpha-oléfines type EPDM peuvent être qualifiés d'élastomères diéniques « essentiellement saturés » (taux de motifs d'origine diénique faible ou très faible, toujours inférieur à 15 % (% en mole).

Ces définitions étant données, on entend plus particulièrement par élastomère diénique, quelle que soit la catégorie ci-dessus, susceptible d'être utilisé dans la matrice élastomérique de la composition de caoutchouc conforme à l'invention:
(a)- tout homopolymère obtenu par polymérisation d'un monomère diène conjugué ayant de 4 à 12 atomes de carbone ;
(b)- tout copolymère obtenu par copolymérisation d'un ou plusieurs diènes conjugués entre eux ou avec un ou plusieurs composés vinyle aromatique ayant de 8 à 20 atomes de carbone;
(c)- un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène
(d)- un copolymère d'isobutène et d'isoprène (caoutchouc butyle), ainsi que les versions halogénées, en particulier chlorées ou bromées, de ce type de copolymère.

A titre de diènes conjugués conviennent notamment le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinyle aromatique conviennent par exemple le styrène, l'ortho-, méta-, para-méthylstyrène, le mélange commercial « vinyle-toluène », le para-tertiobutylstyrène, les méthoxystyrènes, les chlorostyrènes, le vinylmésitylène, le divinylbenzène, le vinylnaphtalène.

Les copolymères diéniques précédemment cités (catégorie (b)) peuvent contenir entre 99 % et 20 % en poids d'unités diéniques et entre 1 % et 80 % en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

Conviennent les polybutadiènes et en particulier ceux ayant une teneur (% molaire) en unités -1,2 comprise entre 4% et 80% ou ceux ayant une teneur (% molaire) en cis-1,4 supérieure à 80 %, les polyisoprènes, les copolymères de butadiène-styrène et en particulier ceux ayant une teneur en styrène comprise entre 5 % et 50 % en poids et plus particulièrement entre 20 % et 40 %, une teneur (% molaire) en liaisons -1,2 de la partie butadiénique comprise entre 4 % et 65 %, une teneur (% molaire) en liaisons trans-1,4 comprise entre 20 % et 80 %, les copolymères de butadiène-isoprène et notamment ceux ayant une teneur en isoprène comprise entre 5 % et 90 % en poids et une température de transition vitreuse (Tg, mesurée selon ASTM D3418) de -40°C à -80°C, les copolymères isoprène-styrène et notamment ceux ayant une teneur en styrène comprise entre 5 % et 50 % en poids et une Tg comprise entre -25°C et -50°C. Dans le cas des copolymères de butadiène-styrène-isoprène conviennent notamment ceux ayant une teneur en styrène comprise entre 5 % et 50 % en poids et plus particulièrement comprise entre 10 % et 40 %, une teneur en isoprène comprise entre 15 % et 60 % en poids et plus particulièrement entre 20 % et 50 %, une teneur en butadiène comprise entre 5 % et 50 % en poids et plus particulièrement comprise entre 20 % et 40 %, une teneur (% molaire) en unités -1,2 de la partie butadiénique comprise entre 4 % et 85 %, une teneur (% molaire) en unités trans -1,4 de la partie butadiénique comprise entre 6 % et 80 %, une teneur (% molaire) en unités -1,2 plus -3,4 de la partie isoprénique comprise entre 5 % et 70 % et une teneur (% molaire) en unités trans -1,4 de la partie isoprénique comprise entre 10 % et 50 %, et plus généralement tout copolymère butadiène-styrène-isoprène ayant une Tg comprise entre -20°C et -70°C.

Par « élastomère isoprénique », on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse ; parmi ces polyisoprènes de synthèse, sont utilisés de préférence des polyisoprènes ayant un taux (% molaire) de liaisons cis-1,4 supérieur à 90 %, plus préférentiellement encore supérieur à 98 %.

Préférentiellement, la composition de l'invention peut comprendre au moins un deuxième élastomère différent du ou des élastomères butyles. A titre de deuxième élastomère présent dans la composition, on peut notamment citer les élastomères diéniques autres que les élastomères butyles précédemment cités.

Plus préférentiellement, le deuxième élastomère est un élastomère diénique choisi parmi les polybutadiènes, les polyisoprènes de synthèse, le caoutchouc naturel, les copolymères de butadiènes, les copolymères d'isoprènes et les mélanges de ces élastomères.

Plus préférentiellement encore, le second élastomère est un élastomère diénique choisi parmi le caoutchouc naturel (NR) et les polyisoprènes de synthèse (IR).

En résumé, le caoutchouc butyle de la composition conforme à l'invention est choisi préférentiellement dans le groupe des élastomères diéniques essentiellement saturés constitué par les copolymères d'isobutylène et d'isoprène et leurs dérivés halogénés, cet élastomère essentiellement saturé pouvant être utilisé en coupage (mélange) avec un élastomère choisi dans le groupe des élastomère diéniques fortement insaturés constitué par les polybutadiènes (en abrégé "BR"), les polyisoprènes (IR) de synthèse, le caoutchouc naturel (NR), les copolymères de butadiène, les copolymères d'isoprène, les copolymères de butadiène-styrène (SBR), les copolymères d'isoprène-butadiène (BIR), les copolymères d'isoprène-styrène (SIR) et les copolymères d'isoprène-butadiène-styrène (SBIR) et les mélanges de ces élastomères, et de préférence avec un élastomère choisi parmi le caoutchouc naturel (NR) et les polyisoprènes de synthèse (IR).

Selon un mode de réalisation, l'élastomère butyle (ou le mélange d'élastomères butyles) est (sont) l'élastomère majoritaire de la composition de caoutchouc de l'invention ; c'est-à-dire que le ou les caoutchoucs butyles utilisables dans la composition de la présente invention représentent au moins 50 pce, c'est-à-dire qu'ils représentent au moins 50 % en poids du poids total de la matrice élastomérique. De préférence le taux de caoutchouc butyle ou de mélange de caoutchoucs butyles est strictement supérieur à 50 pce, de préférence strictement supérieur à 55 pce.

De manière plus préférée de ce mode de réalisation, le ou les caoutchoucs butyles ont une teneur variant de 70 à 95 pce, de préférence variant de 85 à 95 pce.

Dans une autre variante, l'élastomère butyle (ou le mélange d'élastomères butyles) est (sont) le(s) seul(s) élastomère(s) de la matrice élastomérique, autrement dit le taux d'élastomère butyle ou de mélange d'élastomères butyles dans la composition est égal à 100 pce.

### ∘ Noir de carbone

Comme vu précédemment, la composition de l'invention comprend du noir de carbone avec un taux allant de 2 à 15 pce.

Le noir de carbone est une charge renforçante, bien connue de l'homme du métier, utilisée dans les compositions de caoutchouc.

On entend par « charge(s) renforçante(s) » au sens de la présente invention, tout type de charges connues pour ses capacités à renforcer une composition de caoutchouc utilisable pour la fabrication de pneumatiques, c'est-à-dire notamment connues pour améliorer les propriétés de cette composition. Les propriétés de renforcement d'une charge renforçante peuvent être mesurées par toute technique connue de l'homme du métier notamment par mesure des propriétés dynamiques d'une composition à laquelle la charge renforçante a été introduite et en traçant les courbes module/allongement. La mesure des propriétés dynamiques s'effectue selon la norme NF T-46-002 de septembre 1988.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTI), comme par exemple les noirs N115, N134, N234, N326, N330, N339, N347, N375, ou encore, selon les applications visées, les noirs de séries plus élevées (par exemple N660, N683, N772), voire même N990.

Bien entendu, on peut utiliser un seul noir de carbone ou un coupage de plusieurs noirs de carbone de grades ASTM différents.

De manière préférée, la teneur en noir de carbone dans la composition de caoutchouc varie de 2 à 9 pce.

### ∘ Graphite

Comme vu précédemment, la composition de l'invention comprend du graphite avec un taux supérieur ou égale à 60 pce.

Le graphite est une charge semi-renforçante, utilisée dans les compositions de caoutchouc.

Les charges semi-renforçantes ne sont pas capables de renforcer à elles seules une composition de caoutchouc destinée à la fabrication de pneumatiques. En d'autres termes, elles ne sont pas aptes à remplacer, dans sa fonction de renforcement, un noir de carbone conventionnel de grade pneumatique, cependant elles permettent une augmentation du module en traction d'une composition de caoutchouc dans laquelle elles sont incorporées, c'est pourquoi on les nomme « semi-renforçantes ». Les modules en traction sont mesurés selon la norme NFT 46-002 de septembre 1988.

Par graphite, on entend de manière générale un ensemble de feuillets hexagonaux non compacts d'atomes de carbone : les graphènes. Le graphite, système cristallin hexagonal, présente un empilement de type ABAB où le plan B est translaté par rapport au plan A ; il appartient au groupe cristallin : groupe d'espace P63/mmc.

Ces définitions étant données, on entend plus particulièrement par graphite susceptible d'être utilisé selon l'invention :
- (a) tout graphite naturel, associé aux roches affectées par le métamorphisme, après séparation des impuretés accompagnant les veines de graphite et après broyage;
- (b) tout graphite naturel expansable thermiquement, i.e. dans lequel est intercalé un composé chimique à l'état liquide, par exemple un acide, entre ses plans de graphène;
- (c) tout graphite naturel expansé, ce dernier étant réalisé en deux temps : intercalation d'un composé chimique à l'état liquide, par exemple un acide, entre les plans de graphène d'un graphite naturel par traitement chimique et expansion à haute température ;
- (d) tout graphite synthétique obtenu par graphitisation de coke de pétrole.

La composition de caoutchouc selon l'invention peut contenir un seul graphite ou un mélange de plusieurs graphites ; ainsi, par exemple, on peut avoir un coupage de graphite naturel et/ou de graphite expansé et/ou de graphite synthétique.

Le graphite tel que défini précédemment, peut se présenter sur un plan morphologique sous une forme lamellaire ou non.

De manière préférée, le graphite se présente sous forme lamellaire.

De manière préférée, le taux de graphite dans la composition de caoutchouc de l'invention est inférieur ou égal à 100 pce.

De manière préférée, le taux de graphite dans la composition de l'invention est supérieur ou égal à 65 pce, de préférence supérieur ou égal à 70 pce, plus préférentiellement supérieur ou égal à 75 pce.

Autrement dit, le taux de graphite dans la composition de l'invention peut, par exemple, aller de 60 pce à 100 pce, de préférence aller de 65 pce à 100 pce, de manière plus préférée aller de 70 pce à 100 pce et de manière encore plus préférée aller de 75 pce à 100 pce.

Les demanderesses ont trouvé que des taux spécifiques de graphite tel que décrit ci-dessus associé à un faible taux de noir de carbone tel que décrit précédemment dans une composition de caoutchouc, permet d'obtenir des compositions de caoutchouc qui présentent simultanément une bonne imperméabilité, notamment aux gaz, ainsi que des propriétés mécaniques telles que la contrainte à la rupture et l'énergie à la rupture améliorées par rapport aux compositions de l'art antérieur.

### ∘ Huile plastifiante

Comme précisé précédemment la composition de caoutchouc comprend au moins une huile plastifiante dont le taux est inférieur ou égal à 30 pce.

Par définition, une huile plastifiante (aussi appelée plastifiant liquide) est liquide à température ambiante (23°C) et pression atmosphérique (1,013*10⁵ Pa) compatible, c'est-à-dire miscible au taux utilisé avec la composition de caoutchouc à laquelle elle est destinée, de manière à agir comme un véritable agent diluant.

La composition de caoutchouc de l'invention peut contenir une seule huile plastifiante ou un mélange de plusieurs huiles plastifiantes. Dans la suite de la présente description, on utilise l'expression « d'huile plastifiante » ou l'expression « d'huiles plastifiantes », sauf mention expresse contraire, pour désigner indifféremment une huile plastifiante ou un mélange d'huiles plastifiantes.

Cette ou ces huiles plastifiantes ont généralement une température de transition vitreuse faible, inférieure à -20°C (Tg, mesurée selon ASTM D3418), de préférence inférieure à -40°C.

Les températures de transition vitreuse sont mesurées de manière connue par DSC (« Differential Scanning Calorimetry ») selon la norme ASTM D3418.

A titre d'huile plastifiante utilisable dans la gomme intérieure selon l'invention, on peut utiliser toutes les huiles dites « d'extension » qu'elles soient de nature aromatique ou non-aromatique connues pour leurs propriétés plastifiantes vis-à-vis des élastomères utilisés dans la présente invention.

Conviennent particulièrement les huiles plastifiantes choisies dans le groupe constitué par les polymères diéniques liquides, les huiles polyoléfiniques, les huiles naphténiques, les huiles paraffiniques, les huiles DAE (Distillate Aromatic Extracts), les huiles MES (Médium Extracted Solvates), les huiles TDAE (Treated Distillate Aromatic Extracts), les huiles RAE (Residual Aromatic Extracts), les huiles TRAE (Treated Residual Aromatic Extracts), les huiles SRAE (Safety Residual Aromatic Extracts), les huiles minérales, les huiles végétales, les plastifiants éthers, les plastifiants esters, les plastifiants phosphates, les plastifiants sulfonates et les mélanges de ces composés.

Conviennent également les polymères liquides issus de la polymérisation d'oléfines ou de diènes, comme par exemple ceux choisis dans le groupe constitué par les polybutènes, les polydiènes, en particulier les polybutadiènes, les polyisoprènes, les copolymères de butadiène et d'isoprène, les copolymères de butadiène ou d'isoprène et de styrène, et les mélanges de ces polymères liquides. La masse molaire moyenne en nombre de tels polymères liquides est préférentiellement comprise dans un domaine allant de 500 g/mol à 50 000 g/mol, plus préférentiellement de 1000 g/mol à 10 000 g/mol. A titre d'exemple peuvent être cités notamment les produits « Ricon » de la société Sartomer.

Conviennent également les huiles polyisobutylènes fonctionnalisées ou non, ayant une masse moléculaire comprise entre 200 g/mol et 40 000 g/mol.

Selon un autre mode de réalisation préférentiel de l'invention, la ou les huiles plastifiantes sont des huiles végétales (telles que huiles de lin, carthame, soja, maïs, coton, navette, ricin, abrasin, pin, tournesol, palme, olive, noix de coco, arachide, pépin de raisin, et les mélanges de ces huiles, en particulier une huile de tournesol).

Selon un autre mode de réalisation particulier de l'invention, la ou les huiles plastifiantes sont un éther comme par exemple les polyéthylène glycols ou les polypropylène glycols.

Conviennent également les huiles plastifiantes choisies dans le groupe constitué par les plastifiants esters, les plastifiants phosphates, les plastifiants sulfonates et les mélanges de ces composés. Préférentiellement, l'huile plastifiante est choisie parmi les polymères diéniques liquides, les huiles naphténiques, les huiles paraffiniques, les huiles MES, les huiles TDAE, les huiles minérales, les huiles végétales, les plastifiants éthers, les plastifiants esters, les plastifiants phosphates, les plastifiants sulfonates et les mélanges de ces composés.

Préférentiellement, le taux d'huile plastifiante dans la composition est supérieur ou égal à 5 pce.

Avantageusement, le taux d'huile plastifiante dans la composition va de 5 pce à 30 pce, de manière préférée de 10 pce à 20 pce

### ∘ Résine plastifiante

Comme précisé précédemment, la composition selon l'invention peut comprendre au moins une résine plastifiante à un taux inférieur ou égal à 5 pce.

Par opposition avec les huiles plastifiantes, on entend par résine plastifiante un composé qui est solide à température ambiante (23°C) et à pression atmosphérique (1,013*10⁵ Pa).

Cette ou ces résines plastifiantes ont généralement une température de transition vitreuse, supérieure à 20°C (Tg, mesurée selon ASTM D3418), de préférence supérieure à 30°C.

La composition de caoutchouc de l'invention peut contenir une seule résine plastifiante ou un mélange de plusieurs résines plastifiantes. Dans la suite de la présente description, on utilise l'expression « résine plastifiante » ou l'expression « résines plastifiantes », sauf mention expresse contraire, pour désigner indifféremment une résine plastifiante ou un mélange de résines plastifiantes.

De manière préférée, les résines plastifiantes utilisables dans les compositions de l'invention sont des résines plastifiantes hydrocarbonées.

Les résines hydrocarbonées sont des polymères bien connus de l'homme du métier, miscibles donc par nature dans les compositions d'élastomère(s) lorsqu'elles sont qualifiées en outre de « plastifiantes ».

Ces résines plastifiantes hydrocarbonées présentent généralement une température de transition vitreuse supérieure à 20°C et une température de ramollissement inférieure à 170°C. Les températures de ramollissement (« softening point ») sont mesurées selon la norme ASTM E-28.

Elles ont été largement décrites par exemple dans l'ouvrage intitulé « Hydrocarbon Resins » de R. Mildenberg, M. Zander et G. Collin (New York, VCH, 1997, ISBN 3-527-28617-9) dont le chapitre 5 est consacré à leurs applications, notamment en caoutchouterie pneumatique (5.5. «Rubber Tires and Mechanical Goods »).

Elles peuvent être aliphatiques, naphténiques, aromatiques ou encore du type aliphatique/naphténique/aromatique c'est-à-dire à base de monomères aliphatiques et/ou naphténiques et/ou aromatiques. Elles peuvent être naturelles ou synthétiques, à base ou non de pétrole (si tel est le cas, elles sont connues aussi sous le nom de résines de pétrole). Elles sont préférentiellement exclusivement hydrocarbonées, c'est-à-dire qu'elles ne comportent que des atomes de carbone et d'hydrogène.

Préférentiellement, la teneur en résine dans la composition de caoutchouc selon l'invention varie de 0 à 5 pce.

### ∘ Autres additifs

La composition de caoutchouc selon l'invention peut comporter également tout ou partie des additifs usuels habituellement utilisés dans les compositions d'élastomères destinées à la fabrication de pneumatiques, comme par exemple des agents de protection tels que anti-ozonants chimiques, anti-oxydants, des agents anti-fatigue, des accepteurs (par exemple résine phénolique novolaque) ou des donneurs de méthylène (par exemple HMT ou H3M), un système de réticulation à base soit de soufre, soit de donneurs de soufre et/ou de peroxyde et/ou de bismaléimides et/ ou des résines vulcanisantes, des accélérateurs de vulcanisation, des activateurs de vulcanisation.

### ∘ Fabrication des compositions de l'invention

La composition de caoutchouc selon l'invention peut être fabriquée dans des mélangeurs appropriés, en utilisant deux phases de préparation successives bien connues de l'homme du métier.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base (le ou les caoutchoucs butyles, le ou les autres élastomères éventuels, l'huile et/ou la résine plastifiante éventuelle(s), le noir du carbone et le graphite), puis dans un deuxième temps, par exemple après une à deux minutes de malaxage, les autres additifs éventuels à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères selon l'invention en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé « MBTS »), N-cyclohexyl-2-benzothiazyle sulfénamide (en abrégé « CBS »), N,N-dicyclohexyl-2-benzothiazyle sulfénamide (en abrégé « DCBS »), N-ter-butyl-2-benzothiazyle sulfénamide (en abrégé « TBBS »), N-ter-butyl-2-benzothiazyle sulfénimide (en abrégé « TBSI »), dibenzyldithiocarbamate de zinc (en abrégé « ZBEC ») et les mélanges de ces composés.

De préférence, on utilise un accélérateur primaire du type sulfénamide.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication de pneumatique ou par exemple pour la fabrication d'une gomme intérieure.

### ∘ Utilisation de la composition de l'invention

La composition de caoutchouc selon l'invention est utilisable dans tout type d'objet nécessitant de protéger des éléments contre des arrivées d'oxygène et d'eau. Par exemple, la composition de caoutchouc selon l'invention peut être utilisée comme gomme intérieure dans des bateaux, tels que les zodiac, des ballons ou des balles utilisés pour le jeu ou le sport, des pneumatiques ...

Ainsi, un objet de la présente invention est une gomme intérieure comprenant au moins une composition telle que définie précédemment.

L'invention concerne également un pneumatique comprenant au moins une composition de caoutchouc telle que définie précédemment.

Par ailleurs, l'invention concerne également un pneumatique comprenant au moins une gomme intérieure telle que définie précédemment.

De manière générale, le pneumatique selon l'invention est destiné à équiper des véhicules à moteur de type tourisme, SUV (« Sport Utility Vehicles »), deux roues (notamment motos), avions, ainsi que des véhicules industriels tels que des camionnettes, des poids-lourds et autres véhicules de transport ou de manutention.

### ∘ Mode de réalisation préférée des compositions de caoutchouc de l'invention

Parmi les modes de réalisation préférés de l'invention, on peut citer :
- une composition de caoutchouc comprenant au moins un élastomère butyle ou un mélange d'élastomère butyle à un taux supérieur à 55pce, de préférence à un taux allant de 70 pce à 90 pce, du noir de carbone avec un taux allant de 2 à 9 pce, du graphite dont le taux est supérieur ou égale à 65 pce, de préférence va de 65 pce à 100 pce et une huile plastifiante dont le taux va de 5 à 30 pce, de préférence va de 10 à 20 pce; les caractéristiques préférées de chacun des constituants tels que décrit ci-dessus s'appliquent à ce mode de réalisation,
- une composition de caoutchouc comprenant au moins un élastomère butyle ou un mélange d'élastomère butyle à un taux égal à 100 pce, du noir de carbone avec un taux allant de 2 à 9 pce, du graphite dont le taux est supérieur ou égale à 65 pce, de préférence va de 65 pce à 100 pce et une huile plastifiante dont le taux va de 5 à 30 pce, de préférence va de 10 à 20 pce; les caractéristiques préférées de chacun des constituants tels que décrits ci-dessus s'appliquent à ce mode de réalisation.

L'invention ainsi que ses avantages seront compris de manière plus approfondie, à la lumière des exemples de réalisation qui suivent, qui ne sauraient limiter l'invention.

### EXEMPLES :

### A) Préparation et tests des compositions de caoutchouc

On procède pour les essais qui suivent de la manière suivante : on introduit dans un mélangeur interne (taux de remplissage final : environ 70 % en volume), dont la température initiale de cuve est d'environ 60°C, successivement le ou les caoutchoucs butyles, le ou les autres élastomères le cas échéant, le noir de carbone et le graphite et, la résine plastifiante et/ou l'huile plastifiante si elles sont présentes dans la composition de caoutchouc, ainsi que les divers autres ingrédients à l'exception du système de vulcanisation.

On conduit alors un travail thermomécanique (phase non-productive) en une étape, qui dure au total environ 3 à 4 min, jusqu'à atteindre une température maximale de « tombée » de 140°C.

On récupère le mélange ainsi obtenu, on le refroidit puis on incorpore du soufre, un accélérateur type sulfénamide et les autres éléments du système de vulcanisation sur un mélangeur (homo-finisseur) à 30°C, en mélangeant le tout (phase productive) pendant un temps approprié (par exemple entre 5 et 12 min).

Les compositions ainsi obtenues sont ensuite calandrées soit sous forme de plaques (épaisseur de 2 à 3 mm) ou feuilles fines de caoutchouc pour la mesure de leurs propriétés physiques ou mécaniques, soit extrudées sous la forme de gommes intérieures de pneumatique.

### B/ Compositions testées

Les exemples présentés dans le tableau 1 ont pour objet de comparer les différentes propriétés de caoutchouterie d'une série de compositions C1 à C4 conformes à l'invention à une composition témoin T1 correspondant à l'art antérieur EP2671917. Les résultats des propriétés mesurées après cuisson sont présentés au tableau 2.

Les taux des différents constituants des compositions présentées dans le tableau 1 sont exprimés en pce (partie en poids pour cent parties en poids d'élastomère).

**Tableau 1**

| | T1 | C1 | C2 | C3 | C4 |
|---|---|---|---|---|---|
| Caoutchouc butyle (1) | 100 | 100 | 100 | 100 | 100 |
| Noir de carbone (2) | 5 | 5 | 5 | 5 | 5 |
| Graphite (3) | (-) | 80 | 65 | 80 | 80 |
| Argile (4) | 80 | (-) | (-) | (-) | (-) |
| Huile plastifiant(5) | 10 | 10 | 15 | 15 | 20 |
| Soufre | 0,75 | 0,75 | 0,75 | 0,75 | 0,75 |
| MBTS(6) | 0,6 | 0,6 | 0,6 | 0,6 | 0,6 |
| ZnO | 0,75 | 0,75 | 0,75 | 0,75 | 0,75 |
| Acide stéarique | 1,5 | 1,5 | 1,5 | 1,5 | 1,5 |

| | | | | | |
|---|---|---|---|---|---|
| (1) Polyisobutylène bromé commercialisé sous la référence BB2222 par la société EXXON Mobile CHEMICAL. (2) Noir de carbone N772 REGAL@SRF commercialisé par Cabot Ravenne. (3) Graphite naturel commercialisé par la société Imerys sous la dénomination LSG6 (4) Argile ou kaolin naturel Polwhite™ KL commercialisé par Imerys, de surface spécifique 13m²/g (5) Huile TDAE Vivatec 500 commercialisé par Repsol (6) Disulfure de 2-mercaptobenzothiazyle commercialisé par General Quimica SAU | | | | | |

La composition T1 est une composition témoin.

La composition C1 conforme à l'invention diffère de la composition T1 en ce que l'argile a été remplacé par du graphite.

La composition C2 conforme à l'invention diffère de la composition C1 par le taux de graphite.

Les compositions C3 et C4 conformes à l'invention diffèrent de la composition C1 par leur taux d'huile plastifiante.

**Tableau 2**

| | T1 | C1 | C2 | C3 | C4 |
|---|---|---|---|---|---|
| Contrainte à la rupture moyenne en base 100 | 100 | 168 | 151 | 159 | 134 |
| Energie Rupture en base 100 | 100 | 113 | 150 | 131 | 112 |
| Température de transition vitreuse dynamique Tg (°C) | - 22,3 | - 19,3 | - 21,8 | - 22,0 | - 22,6 |
| Perméabilité à l'oxygène en base 100 | 100 | 72 | 102 | 77 | 85 |

Le remplacement de l'argile par du graphite dans les compositions conforme à l'invention C1 à C4 permet d'obtenir soit une diminution de la perméabilité à l'oxygène par rapport à la composition T1 donc une amélioration de l'imperméabilité pour les compositions C1, C3 et C4, soit pour la composition C2 une perméabilité à l'oxygène équivalente à celle de la composition C1.

De manière surprenante l'utilisation d'un fort taux de graphite avec un faible taux de noir de carbone dans la composition C1 permet d'améliorer les propriétés de contraintes à la rupture et d'améliorer l'énergie rupture par rapport à la composition témoin 1.

Ces améliorations de contraintes à la rupture et d'énergie rupture sont aussi observées pour les compositions C2 à C4 selon l'invention dans lesquelles le taux de graphite et d'huile plastifiante varient.

La composition C1 selon l'invention présente des propriétés de rigidité à froid légèrement inférieures à celles de la composition témoin T1. Ce niveau reste cependant acceptable pour une utilisation en pneumatique.

L'augmentation du taux d'huile plastifiante dans les compositions de l'invention C2 à C4 permet d'obtenir des propriétés de rigidité à froid équivalentes à celles de la composition témoin T1 et de manière surprenante tout en maintenant les propriétés d'imperméabilité, voire en les améliorant.

## Revendications

1. Composition de caoutchouc à base d'au moins:
- un élastomère,
- du noir de carbone avec un taux allant de 2 et 15 pce,
- du graphite avec un taux supérieur ou égal à 60 pce, et
- une huile plastifiante dont le taux est inférieur ou égal à 30 pce.

2. Composition selon la revendication 1, dans laquelle le taux de graphite est inférieur ou égal à 100 pce

3. Composition de caoutchouc selon l'une des quelconque des revendications 1 ou 2, dans laquelle le taux de graphite est supérieur ou égal à 65 pce, de préférence supérieur ou égal à 70 pce, plus préférentiellement supérieur ou égal à 75 pce.

4. Composition de caoutchouc selon l'une quelconque des revendications 1 à 3, dans laquelle le taux de noir de carbone est inférieur ou égal à 9 pce, plus préférentiellement dans laquelle le taux de noir de carbone va de 2 à 9 pce.

5. Composition de caoutchouc selon l'une quelconque des revendications 1 à 4, dans laquelle l'élastomère est un élastomère butyle ou un mélange d'élastomères butyles.

6. Composition de caoutchouc selon la revendication 5, dans laquelle le ou les élastomères butyles sont choisis parmi les polymères isobutylène, les copolymères d'isobutylène et d'isoprène, les polymères isobutylène halogénés et les copolymères d'isobutylène et d'isoprène halogénés.

7. Composition de caoutchouc selon l'une quelconque des revendications 5 ou 6, comprenant au moins un deuxième élastomère différent d'un élastomère butyle ou d'un mélange d'élastomères butyles.

8. Composition de caoutchouc selon la revendication 7, dans laquelle le deuxième élastomère est un élastomère diénique choisi parmi les polybutadiènes, les polyisoprènes de synthèse, le caoutchouc naturel, les copolymères de butadiènes, les copolymères d'isoprènes et les mélanges de ces élastomères.

9. Composition de caoutchouc selon l'une quelconque des revendications 5 à 8, dans laquelle le ou les élastomères butyles ont un taux supérieur ou égal à 50 pce.

10. Composition de caoutchouc selon l'une quelconque des revendications 1 à 9, comprenant une résine plastifiante dont le taux est inférieur ou égal à 5 pce.

11. Composition de caoutchouc selon l'une quelconque des revendications 1 à 10, dans laquelle, le taux d'huile plastifiante est supérieur ou égal à 5 pce.

12. Composition de caoutchouc selon l'une quelconque des revendications 1 à 10, dans laquelle le taux d'huile plastifiante va de 5 à 30 pce, de préférence va de 10 à 20 pce.

13. Composition de caoutchouc selon l'une quelconque des revendications 1 à 12, dans laquelle l'huile plastifiante est choisie parmi les polymères diéniques liquides, les huiles naphténiques, les huiles paraffiniques, les huiles MES, les huiles TDAE, les huiles minérales, les huiles végétales, les plastifiants éthers, les plastifiants esters, les plastifiants phosphates, les plastifiants sulfonates et les mélanges de ces composés.

14. Gomme intérieure comprenant au moins une composition telle que définie à l'une quelconque des revendications 1 à 13.

15. Pneumatique comprenant au moins une composition telle que définie à l'une quelconque des revendications 1 à 13 ou comprenant une gomme intérieure selon la revendication 14.

## Patentansprüche

1. Kautschukzusammensetzung auf Basis von mindestens:
- einem Elastomer,
- Ruß mit einem Gehalt im Bereich von 2 bis 15 phe,
- Graphit mit einem Gehalt größer oder gleich 60 phe und
- ein Weichmacheröl, dessen Gehalt kleiner oder gleich 30 phe ist.

2. Zusammensetzung nach Anspruch 1, wobei der Graphitgehalt kleiner oder gleich 100 phe ist.

3. Kautschukzusammensetzung nach Anspruch 1 oder 2, wobei der Graphitgehalt größer oder gleich 65 phe, vorzugsweise größer oder gleich 70 phe, weiter bevorzugt größer oder gleich 75 phe, ist.

4. Kautschukzusammensetzung nach einem der Ansprüche 1 bis 3, wobei der Rußgehalt kleiner oder gleich 9 phe ist, weiter bevorzugt wobei der Rußgehalt im Bereich von 2 bis 9 phe liegt.

5. Kautschukzusammensetzung nach einem der Ansprüche 1 bis 4, wobei es sich bei dem Elastomer um ein Butylelastomer oder eine Mischung von Butylelastomeren handelt.

6. Kautschukzusammensetzung nach Anspruch 5, wobei das Butylelastomer bzw. die Butylelastomere aus Isobutylen-Polymeren, Isobutylen-Isopren-Copolymeren, halogenierten Isobutylen-Polymeren und halogenierten Isobutylen-Isopren-Copolymeren ausgewählt ist bzw. sind.

7. Kautschukzusammensetzung nach Anspruch 5 oder 6, umfassend mindestens ein zweites Elastomer, das von einem Butylelastomer oder einer Mischung von Butylelastomeren verschieden ist.

8. Kautschukzusammensetzung nach Anspruch 7, wobei es sich bei dem zweiten Elastomer um ein Dienelastomer handelt, das aus Polybutadienen, synthetischen Polyisoprenen, Naturkautschuk, Butadien-Copolymeren, Isopren-Copolymeren und Mischungen dieser Elastomere ausgewählt ist.

9. Kautschukzusammensetzung nach einem der Ansprüche 5 bis 8, wobei das Butylelastomer bzw. die Butylelastomere einen Gehalt größer oder gleich 50 phe aufweist bzw. aufweisen.

10. Kautschukzusammensetzung nach einem der Ansprüche 1 bis 9, umfassend ein Weichmacherharz, dessen Gehalt kleiner oder gleich 5 phe ist.

11. Kautschukzusammensetzung nach einem der Ansprüche 1 bis 10, wobei der Gehalt an Weichmacheröl größer oder gleich 5 phe ist.

12. Kautschukzusammensetzung nach einem der Ansprüche 1 bis 10, wobei der Gehalt an Weichmacheröl im Bereich von 5 bis 30 phe, vorzugsweise von 10 bis 20 phe, liegt.

13. Kautschukzusammensetzung nach einem der Ansprüche 1 bis 12, wobei das Weichmacheröl aus flüssigen Dienpolymeren, naphthenischen Ölen, Paraffinölen, MES-Ölen, TDAE-Ölen, Mineralölen, Pflanzenölen, Ether-Weichmachern, Ester-Weichmachern, Phosphat-Weichmachern, Sulfonat-Weichmachern und Mischungen dieser Verbindungen ausgewählt ist.

14. Innenseele, umfassend mindestens eine Zusammensetzung gemäß einem der Ansprüche 1 bis 13.

15. Reifen, umfassend mindestens eine Zusammensetzung gemäß einem der Ansprüche 1 bis 13 oder eine Innenseele nach Anspruch 14.

## Claims

1. Rubber composition based on at least:
- one elastomer,
- carbon black in a content ranging from 2 to 15 phr,
- graphite in a content of greater than or equal to 60 phr, and
- a plasticizing oil, the content of which is less than or equal to 30 phr.

2. Composition according to Claim 1, in which the graphite content is less than or equal to 100 phr.

3. Rubber composition according to either of Claims 1 and 2, in which the graphite content is greater than or equal to 65 phr, preferably greater than or equal to 70 phr, more preferentially greater than or equal to 75 phr.

4. Rubber composition according to any one of Claims 1 to 3, in which the carbon black content is less than or equal to 9 phr, more preferably in which the carbon black content ranges from 2 to 9 phr.

5. Rubber composition according to any one of Claims 1 to 4, in which the elastomer is a butyl elastomer or a mixture of butyl elastomers.

6. Rubber composition according to Claim 5, in which the butyl elastomer(s) are chosen from isobutylene polymers, copolymers of isobutylene and of isoprene, halogenated isobutylene polymers and halogenated copolymers of isobutylene and of isoprene.

7. Rubber composition according to either of Claims 5 and 6, comprising at least one second elastomer different from a butyl elastomer or a mixture of butyl elastomers.

8. Rubber composition according to Claim 7, in which the second elastomer is a diene elastomer chosen from polybutadienes, synthetic polyisoprenes, natural rubber, butadiene copolymers, isoprene copolymers and mixtures of these elastomers.

9. Rubber composition according to any one of Claims 5 to 8, in which the butyl elastomer(s) are in a content of greater than or equal to 50 phr.

10. Rubber composition according to any one of Claims 1 to 9, comprising a plasticizing resin, the content of which is less than or equal to 5 phr.

11. Rubber composition according to any one of Claims 1 to 10, in which the content of plasticizing oil is greater than or equal to 5 phr.

12. Rubber composition according to any one of Claims 1 to 10, in which the content of plasticizing oil ranges from 5 to 30 phr, preferably from 10 to 20 phr.

13. Rubber composition according to any one of Claims 1 to 12, in which the plasticizing oil is chosen from liquid diene polymers, naphthenic oils, paraffinic oils, MES oils, TDAE oils, mineral oils, plant oils, ether plasticizers, ester plasticizers, phosphate plasticizers, sulfonate plasticizers, and mixtures of these compounds.

14. Inner liner comprising at least one composition as defined in any one of Claims 1 to 13.

15. Tyre comprising at least one composition as defined in any one of Claims 1 to 13 or comprising an inner liner according to Claim 14.
